# EUROPÄISCHE PATENTSCHRIFT

(11) **EP 3 935 717 B1**
(45) Veröffentlichungstag und Bekanntmachung des Hinweises auf die Patenterteilung: **21.02.2024**
(21) Anmeldenummer: 20708490.6
(22) Anmeldetag: 03.03.2020
(51) Int. Cl.: H02K 11/25, H02K 3/50, G01K 1/08, G01K 1/16

(54) **VERSCHALTUNGSANORDNUNG FÜR EINEN STATOR, TEMPERATURSENSOREINRICHTUNG UND SYSTEM ZUM ERFASSEN EINER TEMPERATUR**
CIRCUIT ARRANGEMENT FOR A STATOR, TEMPERATURE SENSOR DEVICE, AND SYSTEM FOR DETECTING A TEMPERATURE
AGENCEMENT DE CIRCUIT DE STATOR, DISPOSISITF CAPTEUR DE TEMPÉRATURE, ET SYSTÈME DE DÉTECTION DE TEMPÉRATURE

(30) Priorität: 05.03.2019 DE 102019202912
(43) Veröffentlichungstag der Anmeldung: 12.01.2022
(73) Patentinhaber: ZF Friedrichshafen AG, 88046 Friedrichshafen (DE)
(72) Erfinder: WILLACKER, Katja, 97353 Wiesentheid (DE); BRÜCKNER, Christian, 97222 Rimpar (DE); SCHMITT, Daniel, 97708 Bad Bocklet (DE)
(86) Internationale Anmeldenummer: PCT/EP2020/055571
(87) Internationale Veröffentlichungsnummer: WO 2020/178290

(56) Entgegenhaltungen:
- EP-A1- 3 190 688
- CN-U- 203 522 446
- CN-U- 203 942 360
- FR-A1- 2 995 741
- FR-A1- 3 037 738
- FR-A1- 3 046 505
- JP-A- 2018 186 608
- US-A1- 2012 111 145

## Beschreibung

Die vorliegende Erfindung betrifft einen Stator einer elektrischen Maschine mit einer Verschaltungsanordnung und mit einer Temperatursensoreinrichtung gemäß dem Oberbegriff des unabhängigen Patentanspruchs und weiter eine elektrische Maschine mit einem solchen Stator.

Gemäß bekannten Konzepten können Statorspulen oder Statorwicklungen einer Elektromaschine mittels einer Verschaltungsanordnung mit Außenanschlussstellen oder Leistungsanschlüssen kontaktiert werden, um mittels einer elektrischen Schaltung oder Leistungselektronik eine jeweilige Spannung an die einzelnen Phasen der Wicklung anzulegen.

Bekannte Verschaltungsanordnungen weisen beispielsweise Schaltringe auf, die innerhalb eines Trägers aufgenommen sind. Der Träger kann zugleich eine Positionierung der Ringe und eine elektrische Isolation der Schaltringe voneinander bewirken. Die Schaltringe sind im Träger fest fixiert.

Schaltringe weisen beispielsweise Wicklungsanschlüsse, zum Anschluss der Verschaltungsanordnung an die Statorwicklung und Außenanschlüsse auf. Über die Außenanschlüsse werden die einzelnen Statorwicklungen jeweils mit einem Außenanschluss, zum Beispiel mit Stromkabeln der Leistungselektronik kontaktiert.

Beim Betrieb der elektrischen Maschine kann es zu einer Erwärmung des Stators kommen. Es ist beispielsweise notwendig, einen aktuellen Temperaturwert am Stator oder der Verschaltungsanordnung im Betrieb zu erfassen. Beispielsweise kann ein Temperatursensor direkt auf einem Spulenleiter der Statorwicklung oder auf einem Verbindungsleiter der Verschaltungsanordnung positioniert werden.

Aus der JP 2012 057 980 A ist ein Temperaturdetektor mit einem Temperatursensor bekannt. Der Temperatursensor ist auf einem linearen Leiter angeordnet, der eine Spule einer elektrischen Maschine ausbildet, um eine Temperatur des linearen Leiters zu erfassen.

Aus der DE 20 2016 103 030 U1 ist ein Temperatursensor bekannt, der auf einem Stromkontakt befestigt ist. Der Temperatursensor ist mit einem Schrumpfschlauch befestigt und die Anordnung ist in einem Steckergehäuse angeordnet.

Aus der US 2013 270 973 A1 ist eine rotierende elektrische Maschine bekannt. Die elektrische Maschine beinhaltet einen Wicklungsleiter und eine Neutralleitung, die an der Wicklung kontaktiert ist. Die Neutralleitung ist um einen Temperatursensor gewickelt, um die Temperatur der Neutralleitung zu erfassen. Neutralleitung und Temperatursensor sind von einem Gussgehäuse umgeben.

Bei bekannten Konzepten ist beispielsweise die Befestigung des Temperatursensors in einem Bereich eines Spulenleiters vorgesehen, welcher zur Herstellung eines elektrischen Kontaktes zu benachbarten Spulenleitern verwendet wird. Daraus kann sich der Nachteil ergeben, dass die Austauschbarkeit des Sensors (z.B. bei Ausfall des Sensors) auch zur Beschädigung der elektrischen Kontaktierungsstelle führen kann.

Temperatursensoren können z.B. mittels einer Umspritzung befestigt werden, um eine dauerhafte Fixierung des Temperatursensors zu ermöglichen. Bei Temperatursensoren, die mittels einer Umspritzung befestigt sind, bewirkt jedoch ein Demontieren des Temperatursensors zum Beispiel ein erhöhtes Risiko einer Beschädigung eines Statorteils, auf dem der Temperatursensor angebracht ist. Ebenso können Lötverbindungen zwischen Stator und Temperatursensor insbesondere bei Entfernen des Temperatursensors leichter zu Beschädigungen oder auch zu unerwünschten Kurzschlüssen führen.

Die chinesische Gebrauchsmusteranmeldung CN203942360U offenbart einen Motor mit einer Leiterplatine, welche axial benachbart zu einer Statorwicklung angeordnet ist. Die Verschaltungseinrichtung liegt dabei als eine gedruckte Schaltung vor, wobei an dem Kunststoffträger der Leiterplatine über ein Gehäuseelement ein Temperatursensor angeordnet ist. Der Temperatursensor steht einerseits mit dem Kunststoffträger, also mit der Rückseite der Leiterplatine und andererseits über eine Öffnung in der Leiterplatine mit dem Innenraum des Motors in Wärmekontakt. Der Temperatursensor ist dort in einer nicht näher offenbarten Art und Weise axial zwischen der Statorwicklung und den Leiterelementen der Verschaltungsanordnung angeordnet.

Weiter beschreibt das chinesische Gebrauchsmuster CN203522446U einen Motor mit einer Leiterplatine, wobei ein ähnlicher Aufbau wie bei der CN203942360U zugrunde liegt. Ein dort vorhandener Temperatursensor ist mittels eines Sensorhalters an der der Statorwicklung zugewandten Rückseite der Leiterplatine befestigt und liegt zur Erfassung der Temperatur der Wicklung mit dem Sensorkopf an der Statorwicklung an.

Mit der FR 2 995 741 A1 ist eine elektrische Maschine mit mehreren Einzelzahnspulen bekannt geworden, welche mittels einer, mehrere Stromschienen umfassenden Stator-Verschaltungsanordnung verschaltet sind. Ein Kunststoffträgerelement der Stator-Verschaltungsanordnung trägt dabei einen Halter für einen Temperatursensor, dessen Sensorkopf zur Erfassung einer Wicklungstemperatur an einer Einzelzahnspule anliegt.

Aus der EP 3190 688 A1 geht eine elektrische Maschine hervor, deren Stator eine Hairpin-Wicklung aus einer Vielzahl von Hairpin-Leiterelementen trägt, wobei zur Erfassung einer Temperatur der Wicklung an einem dieser Hairpin-Leiterelemente ein Aufnahmegehäuse mit einem Temperatursensor festgelegt ist.

Die FR 3 037 738 A1 und die US 2012/111145 A1 beschreiben weitere Anordnungen zur Temperaturerfassung einer Stator-Wicklung mit Einzelzahnspulen.

Ein gattungsgemäßer Stator einer elektrischen Maschine ist mit der FR3046505 A1 bekannt geworden, wobei ein Temperatursensor an einem Neutralleiter der Statorwicklung angeordnet ist. Der Neutralleiter ist dazu bis auf freie Anschlussbereiche für die Statorwicklung in einen Kunststoffträger eingebettet, in welchem ebenso ein Aufnahmegehäuseabschnitt zur Aufnahme des Temperatursensors vorgesehen ist. Der Sensorkopf des Temperatursensors wird bei der Montage des Stators in diesen Aufnahmegehäuseabschnitt eingelegt und mit einem Deckelverschluss gesichert.

Die JP 2018 186608 A offenbart einen weiteren Stator der eingangs genannten Art mit einer Stator-Verschaltungsanordnung und mit einem Temperatursensor zur Erfassung einer Temperatur der Verschaltungsanordnung. Dazu ist dort eine als Neutralleiter fungierende und in einen Kunststoffträger eingebettete Stromschiene in einem Endbereich aus deren Erstreckungsebene abgewinkelt ausgebildet. An dieser Position ist ein mit dem Kunststoffträger einteilig ausgebildeter Aufnahmegehäuseabschnitt für den Temperatursensor vorgesehen, in welcher der Sensor eingeführt werden und in thermische Anlage an den Neutralleiter gebracht werden kann. Danach wird in den verbleibenden offenen Raumbereich eine Vergussmasse eingebracht, mit welcher der Temperatursensor dicht verkapselt und fixiert wird.

Aufgabe der Erfindung ist es, ein Konzept bereitzustellen, das eine Temperaturerfassung an einer Verschaltungsanordnung für einen Stator sowie ein einfaches Austauschen eines Temperatursensors ermöglicht.

Die Aufgabe wird gelöst durch einen Stator einer elektrischen Maschine mit den im unabhängigen Patentanspruch angeführten Merkmalen und mit einer elektrischen Maschine mit einem solchen Stator. Weitere Aspekte und Weiterbildungen der Erfindung, die zusätzliche Vorteile bewirken können, sind in den abhängigen Ansprüchen, der folgenden Beschreibung sowie in Verbindung mit den gezeigten Figuren beschrieben.

Im Rahmen der vorgeschlagenen Lösung kann die Verschaltungsanordnung des Stators zumindest eine Stromschiene umfassen, die zumindest ein Segment eines Schaltrings mit einem Außenanschluss und einem Wicklungsanschluss ausbilden kann. Am Wicklungsanschluss kann eine Wicklung des Stators angeschlossen werden. Am Außenanschluss kann beispielsweise eine Leistungselektronik angeschlossen werden, um die Statorwicklung anzusteuern oder zu betreiben. Dabei sind Kontaktelemente des Außenanschlusses und des Wicklungsanschlusses in einem Verschaltungsbereich angeordnet, der in Umfangsrichtung des Schaltringsegments ausgebildet ist. Durch den Verschaltungsbereich verläuft ein Strompfad der Verschaltungsanordnung von Außenanschluss zu Wicklungsanschluss.

Ferner weist die Verschaltungsanordnung einen außerhalb des Verschaltungsbereiches an dem Schaltringsegment angeordneten Temperatursensoraufnahmebereich für einen Sensor auf. Dabei ist der Temperatursensoraufnahmebereich zumindest thermisch mit dem Schaltringsegment beziehungsweise der Stromschiene innerhalb des Verschaltungsbereiches gekoppelt. Insbesondere ist vorgesehen, dass der Temperatursensoraufnahmebereich und das Schaltringsegment einteilig ausgebildet sind. Eine Anordnung des Temperatursensoraufnahmebereichs außerhalb des Verschaltungsbereiches kann eine Anordnung in Umfangsrichtung, in axialer Richtung oder in radialer Richtung außerhalb des Verschaltungsbereichs sein.

Der Temperatursensoraufnahmebereich ist als ein Fortsatz der Stromschiene oder eines Verbindungsleiters der Verschaltungsanordnung ausgebildet, der über den Verschaltungsbereich und/oder aus einem Gehäuse, das den Verschaltungsbereich umgibt, hinausragt oder der von dem Verschaltungsbereich in Form einer Abzweigung abragt. Der Temperatursensoraufnahmebereich ist durch eine Aufnahmeschiene ausgebildet, auf die der Sensor, insbesondere ein Temperatursensor, aufgesteckt oder aufgeschoben werden kann. Durch die thermische Kopplung kann eine Temperatur des Temperatursensoraufnahmebereichs einer Temperatur am Strompfad der Verschaltungsanordnung angenähert sein oder dieser im Wesentlichen entsprechen. Somit kann am Temperatursensoraufnahmebereich die Temperatur des Stators mit der Verschaltungsanordnung gemessen oder erfasst werden. Der Temperatursensoraufnahmebereich kann z.B. direkt an den Verschaltungsbereich anschließen oder nahe am Verschaltungsbereich angeordnet sein.

Dabei ist beispielsweise von Vorteil, dass der Temperatursensoraufnahmebereich außerhalb des Strompfades liegt. Somit kann beispielsweise ein Temperatursensor ohne das Risiko einer Beschädigung von Kontaktstellen des Strompfades montiert oder ausgetauscht werden. Insbesondere kann ferner durch eine hervorstehende Form des Temperatursensoraufnahmebereiches, der zumindest von einer Seite frei zugänglich ist, ein Temperatursensor einfach auf dem Temperatursensoraufnahmebereich angebracht werden, sodass auch ein Austauschen des Temperatursensors in einfacher Weise ermöglicht ist.

Die Stromschiene der Verschaltungsanordnung ist beispielsweise aus einem elektrisch leitfähigen Material, insbesondere Metall ausgebildet. Die Stromschiene kann beispielsweise Kupfer, eine Kupferlegierung, Aluminium oder eine Aluminiumlegierung umfassen. Dadurch kann vorteilhafterweise z.B. eine hohe Wärmekopplung oder Wärmeleitfähigkeit zwischen dem Verschaltungsbereich und dem Temperatursensoraufnahmebereich erreicht werden und/oder der Temperatursensoraufnahmebereich zugleich in einfacher und kostengünstiger Weise bereitgestellt werden. Beispielsweise kann der Temperatursensoraufnahmebereich somit auch elektrisch mit dem Verschaltungsbereich gekoppelt sein, aufgrund eines elektrischen Leerlaufes am Ende des Temperatursensoraufnahmebereichs jedoch im Wesentlichen stromlos sein (z.B. mit einer Stromdichte von weniger als 10 % einer Stromdichte innerhalb des Strompfades während eines Betriebs der Verschaltungsanordnung).

Das vorgeschlagene Konzept zeigt somit beispielsweise eine Befestigung des Temperatursensors an einem nicht zur Verschaltung vorgesehenen Bereich der Verschaltungsanordnung. Dieses wird durch das Befestigen des Temperatursensors an dem speziell zur Anbindung vorgehenden Fortsatz erreicht.

Beispielsweise erstreckt sich der Temperatursensoraufnahmebereich in Umfangsrichtung des Schaltringsegments. Alternativ oder zusätzlich kann sich der Temperatursensoraufnahmebereich in einer axialen und/oder radialen Richtung des Schaltringsegments erstrecken. Dadurch ist es möglich, den Temperatursensoraufnahmebereich derart auszubilden, dass insbesondere in einem montierten Zustand der Verschaltungsanordnung ein Zugang zum Temperatursensoraufnahmebereich gegeben ist, um einen Temperatursensor daran in einfacher Weise zu montieren. Beispielsweise weist folglich einer der Verbindungsleiter, z.B. die Stromschiene, mindestens einen in Umfangs-, radialer und/oder in axialer Richtung und/oder in einem bestimmten Winkel von dem Verschaltungsbereich weg verlaufenden Fortsatz auf. Der Querschnitt des Fortsatzes kann dem Querschnitt eines Spulenleiters (beispielsweise einer Statorwicklung) entsprechen, etwa um die an den Spulenleitern herrschende Temperatur verbessert abzubilden.

Beispielsweise weist der Temperatursensoraufnahmebereich zwei Aufnahmeschienen auf. Es ist ferner möglich, dass mehrere Temperatursensoraufnahmebereiche bzw. Fortsätze an einem Verbindungsleiter oder der Stromschiene vorgesehen sind, um z.B. mehrere Temperatursensoren zur Messung der Temperatur einsetzen zu können. Beispielsweise kann auf jede der zwei Aufnahmeschienen ein Temperatursensor montiert werden, um eine redundante Temperaturerfassung zu ermöglichen.

Die Breite des Fortsatzes oder einer Aufnahmeschiene kann der Breite des vorgesehenen Temperatursensors entsprechen, um diesen optimiert auszurichten und damit thermisch reproduzierbar an den Temperatursensoraufnahmebereich anzubinden. Dadurch kann eine besonders einfache Montage des Temperatursensors ermöglicht werden.

Beispielsweise weist der Temperatursensoraufnahmebereich an seinem dem Verschaltungsbereich abgewandten Ende zumindest einen Haltevorsprung auf. Der Haltevorsprung kann sich beispielsweise in radialer oder in axialer Richtung erstreckenden. Der Haltevorsprung kann eine verbesserte Positionierung und/oder eine erhöhte Stabilität der Befestigung des Temperatursensors bewirken. Beispielsweise weist die Kontur des Temperatursensoraufnahmebereichs an seinem freien Ende einen Absatz auf, der je nach vorgesehener Anbindungsvariante des Temperatursensors als axiale Sicherung und/oder axiale Ausrichtung eines Befestigungselements, beispielsweise eines Sensorgehäuses, dient. Der Temperatursensoraufnahmebereich kann z.B. ferner zumindest eine Einkerbung aufweisen, an der etwa ein Klippgehäuse eines Temperatursensors befestigt werden kann.

Beispielsweise bildet ein Gehäuse der Verschaltungsanordnung, das den Temperatursensoraufnahmebereich an einem dem Verschaltungsbereich zugewandten Ende begrenzt, einen Anschlag für eine aufsteckbare Temperatursensoreinrichtung aus.

Dadurch kann eine Montage der Temperatursensoreinrichtung an der Verschaltungsanordnung erleichtert werden, da der Temperatursensor bis zum Anschlag aufgesteckt werden kann, um wie vorgesehen positioniert zu sein. Die Verbindungsleiter (z.B. Stromschienen, welche jeweilige Schaltringsegmente ausbilden) der Verschaltungsanordnung können z.B. mittels einer Vergussmasse voneinander isoliert werden, z.B. teilweise oder vollständig mit Kunststoff umspritzt sein. Der Fortsatz außerhalb der Verschaltungsanordnung ist beispielsweise jedoch ein von dem Verguss oder Umspritzung freier Bereich, sodass der Sensorkopf direkt auf der Oberfläche des Fortsatzes angebracht werden kann. Die Vergussmasse kann somit den Aufnahmeanschlag zum einfachen Justieren des Temperatursensors bereitstellen.

Gemäß der Erfindung wird also ein Stator vorgeschlagen mit einer Temperatursensoreinrichtung zum Aufstecken auf einen Temperatursensoraufnahmebereich der Verschaltungsanordnung, wie zuvor beschrieben. Dabei ist der Temperatursensor der Temperatursensoreinrichtung in einem eine Hartkomponente und/oder eine Weichkomponente umfassenden Sensorgehäuse angeordnet. Ferner weist das Sensorgehäuse eine Öffnung zur Aufnahme des Temperatursensoraufnahmebereichs auf und der Temperatursensor ist an einer Oberfläche innerhalb der Öffnung angeordnet. Dadurch ist beispielsweise in einem aufgesteckten Zustand der Temperatursensoreinrichtung der Temperatursensor automatisch in einem vordefinierten, reproduzierbaren und/oder standardisierten Kontakt mit dem Temperatursensoraufnahmebereich positioniert.

Beispielsweise ist das Sensorgehäuse zumindest teilweise aus einer Hartkomponente, etwa einem Thermoplast gebildet. Das Sensorgehäuse kann Federelemente zum Fixieren des Sensorgehäuses an dem Temperatursensoraufnahmebereich aufweisen. Die Federelemente können beispielsweise in zuvor erwähnten Einkerbungen des Temperatursensoraufnahmebereichs befestigt werden.

Weitere Möglichkeiten zur Befestigung des Temperatursensors am Temperatursensoraufnahmebereich sind die Verwendung eines Weichkomponenten-Sensorgehäuses, das beispielsweise ein Elastomer umfasst. Dadurch kann ein flexibles Sensorgehäuse bereitgestellt werden, das eine stabile Befestigung des Temperatursensors ermöglicht.

Das Sensorgehäusematerial kann insbesondere eine hohe Temperaturfestigkeit aufweisen und/oder ein vorbestimmtes Elastizitätsmodul aufweisen. Alternativ oder zusätzlich kann ein Schrumpfschlauch verwendet werden, um den Temperatursensor am Temperatursensoraufnahmebereich zu befestigen. Durch die schienenförmige Ausbildung des Temperatursensoraufnahmebereichs mit einem freien Ende kann dabei ein einfaches Austauschen des Temperatursensors und erneutes Befestigen mittels eines Schrumpfschlauches erfolgen, ohne die Notwendigkeit des Trennens elektrischer Kontakte.

Mit der Erfindung wird also eine Anordnung zum Erfassen einer Temperatur an einem Stator vorgeschlagen. Die Anordnung umfasst eine Verschaltungsanordnung mit einem Temperatursensoraufnahmebereich, der außerhalb eines Verschaltungsbereiches der Verschaltungsanordnung angeordnet sein kann. Ferner weist das System einen Temperatursensor auf, wobei der Temperatursensor in Kontakt mit dem Temperatursensoraufnahmebereich angeordnet ist. Mit anderen Worten sind Temperatursensor und Temperatursensoraufnahmebereich thermisch gekoppelt. Beispielsweise kann die Anordnung eine zuvor beschriebene Verschaltungsanordnung und eine zuvor beschriebene Temperatursensoreinrichtung umfassen. Beispielsweise ist der Temperatursensor mittels eines vom Temperatursensoraufnahmebereich abnehmbaren Kunststoffsensorgehäuses oder mittels eines Schrumpfschlauchs an dem Temperatursensoraufnahmebereich befestigt.

Beispielsweise kann die Verschaltungsanordnung drei Verbindungsleiter oder Schaltringsegmente aufweisen, welche in axialer oder auch in radialer Richtung in Bezug auf die Statorspulen angeordnet sind, um mit diesen verbunden zu werden. Jeder Verbindungleiter weist Kontaktstellen auf, über welche die Spulenleiter an die Verbindungsleiter verschweißt werden können. Alle Kontaktstellen der Verschaltungsanordnung definieren z.B. den Verschaltungsbereich. Beispielsweise weist genau einer der drei Verbindungsleiter einen Temperatursensoraufnahmebereich für den Temperatursensor auf.

Der Stator weist zum Kontaktieren einer Wicklung des Stators (Statorwicklung) mit einer Schaltvorrichtung oder Leistungselektronik zur Spannungsversorgung der Statorwicklung eine Verschaltungsanordnung gemäß einer zuvor oder im Folgenden beschriebenen Verschaltungsanordnung auf. Weiterhin betrifft die Erfindung eine elektrische Maschine mit einem Stator umfassend eine entsprechende Verschaltungsanordnung, die beispielsweise mit Leistungsanschlüssen kontaktiert ist.

Beispielsweise kann die Temperatur an verschiedenen Stellen am Stator gemessen werden. Zur Messung der Temperatur kann der Temperatursensor beispielsweise an axialer Stirnseite der Wicklung (z.B. konzentrierte Wicklung oder Einzugswicklung) mittels eines Halters, und/oder in einer Öffnung zwischen zwei Spulen oder Wicklungsspulen befestigt werden.

Weitere Aspekte der Erfindung sind auch in Verbindung mit den folgenden Beispielen offenbart.

Einige Beispiele von Vorrichtungen werden nachfolgend bezugnehmend auf die beiliegenden Figuren lediglich beispielhaft näher erläutert. Es zeigen:
- Fig. 1: ein Ausführungsbeispiel einer Verschaltungsanordnung mit einem Temperatursensoraufnahmebereich für einen Temperatursensor;
- Fig. 2: die Verschaltungsanordnung mit Temperatursensoraufnahmebereich in einer Draufsicht;
- Fig. 3: ein Ausführungsbeispiel einer Verschaltungsanordnung mit begrenztem Temperatursensoraufnahmebereich zur Justierung eines Temperatursensors;
- Fig. 4: die Verschaltungsanordnung mit begrenztem Temperatursensoraufnahmebereich in einer Draufsicht;
- Fig. 5: ein Ausführungsbeispiel eines Temperatursensors in einem aufsteckbaren Sensorgehäuse aus einer Hartkomponente;
- Fig. 6: ein Ausführungsbeispiel eines Temperatursensors in einem aufsteckbaren Sensorgehäuse aus einer Weichkomponente;
- Fig. 7: den Temperatursensor im aufsteckbaren Sensorgehäuse aus der Weichkomponente in einer Schnittansicht;
- Fig. 8: eine schematische Ansicht einer Rückseite eines Sensorgehäuses für einen Temperatursensor;
- Fig. 9: ein Ausführungsbeispiel einer Verschaltungsanordnung mit einem Temperatursensoraufnahmebereich und angebrachtem Temperatursensor;
- Fig. 10: die Verschaltungsanordnung mit Temperatursensoraufnahmebereich und angebrachtem Temperatursensor in einer Draufsicht;
- Fig. 11: der Temperatursensoraufnahmebereich mit angebrachtem Temperatursensor in einer Schnittansicht; und
- Fig. 12: ein Ausführungsbeispiel eines Stators mit einer Verschaltungsanordnung mit Temperatursensoraufnahmebereich.

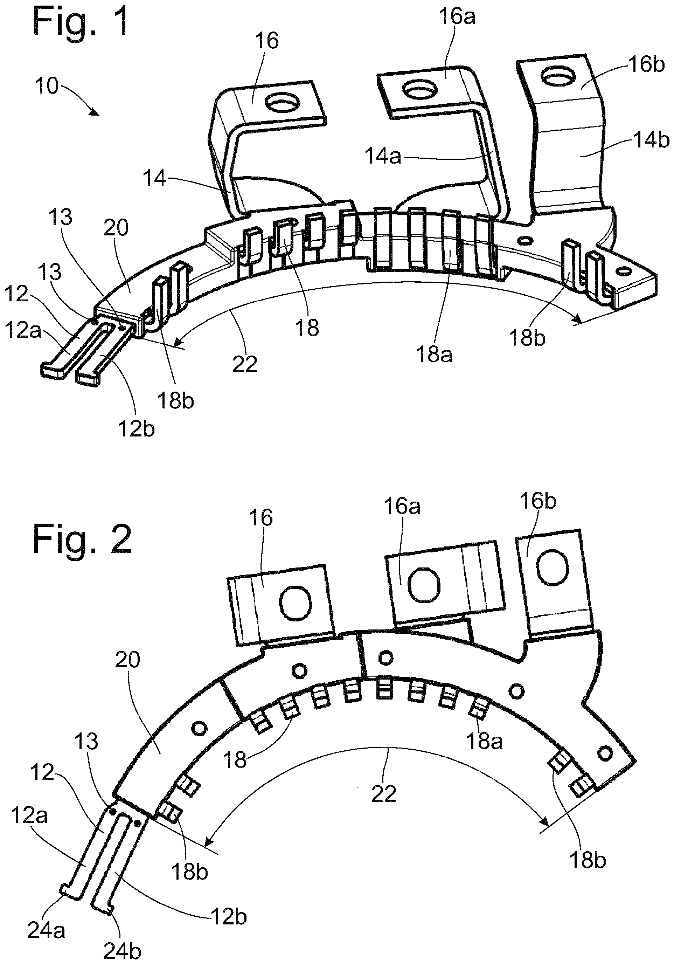

Fig. 1 zeigt ein Ausführungsbeispiel einer Verschaltungsanordnung 10 mit einem Temperatursensoraufnahmebereich 12 zur Befestigung eines Temperatursensors. Die Verschaltungsanordnung 10 weist drei Stromschienen 14, 14a, 14b auf, welche jeweils ein Schaltringsegment mit einem Außenanschluss 16, 16a, 16b und einem Wicklungsanschluss 18, 18a, 18b ausbilden. Die Wicklungsanschlüsse 18, 18a, 18b umfassen jeweils vier voneinander getrennte Anschlussfahnen, an denen jeweils eine Windung einer Statorwicklung kontaktiert werden kann. Die jeweiligen Schaltringsegmente sind in einem Gehäuse 20 aufgenommen, welches die Schaltringsegmente fixiert und elektrisch voneinander isoliert. Die Außenanschlüsse 16, 16a, 16b und die Wicklungsanschlüsse 18, 18a, 18b sind in einem Verschaltungsbereich 22 der Verschaltungsanordnung 10 angeordnet. Der Verschaltungsbereich 22 ist in Umfangsrichtung begrenzt. Beispielsweise sind die Stromschienen 14, 14a, 14b innerhalb des Verschaltungsbereichs 22 von dem Gehäuse 20 umgeben.

Der Temperatursensoraufnahmebereich 12 ist an einer der Stromschienen 14, 14a, 14b außerhalb des Verschaltungsbereiches 22 angeordnet. Beispielsweise umgibt das Gehäuse 20 nicht den Temperatursensoraufnahmebereich 12. Der im Beispiel gezeigte Temperatursensoraufnahmebereich 12 ist eine Erweiterung der Stromschiene 14b. Der Temperatursensoraufnahmebereich 12 ist somit in Einheit mit der Stromschiene 14b gebildet und damit auch elektrisch leitfähig. Dabei verläuft ein Strompfad von dem Außenanschluss 16b der Stromschiene 14b zum Spulenanschluss oder Wicklungsanschluss 18b durch den Verschaltungsbereich 22, wohingegen kein Strompfad innerhalb des Temperatursensoraufnahmebereichs 12 ausgebildet ist. Dadurch, dass Temperatursensoraufnahmebereich 12 und Stromschiene 14b der Verschaltungsanordnung 10 einteilig ausgebildet sind, besteht eine gute thermische Verbindung des Temperatursensoraufnahmebereichs 12 mit der Stromschiene 14b. Beispielsweise umfasst die Stromschiene 14b Kupfer oder Aluminium, welche neben einer elektrischen Leitfähigkeit auch eine gute thermische Leitfähigkeit bereitstellen. Dadurch ist es möglich, dass eine Temperatur an dem Temperatursensoraufnahmebereich 12 der Stromschiene 14b im Wesentlichen einer Temperatur des Schaltringsegments der Stromschiene 14b innerhalb des Verschaltungsbereichs 22 entspricht. Ein am Temperatursensoraufnahmebereich 12 angebrachter Temperatursensor kann somit eine Temperatur am Kontaktierungsbereich zwischen Außenanschlüssen und Statorwicklung mit hoher Genauigkeit erfassen.

Der Temperatursensoraufnahmebereich 12 des Ausführungsbeispiels ist mit zwei Abschnitten ausgebildet, entsprechend sind eine erste sich in Umfangsrichtung erstreckende Aufnahmeschiene 12a und eine zweite Aufnahmeschiene 12b vorgesehen. Beispielsweise ist dadurch ermöglicht, zwei separate Temperatursensoren an dem Temperatursensoraufnahmebereich 12 anzubringen. Ferner sind am Temperatursensoraufnahmebereich 12 an einer zum Gehäuse 20 weisenden Seite Markierungspunkte 13 vorgesehen. Die Markierungspunkte 13 können anzeigen, wie weit ein Sensorgehäuse eines am Temperatursensoraufnahmebereich 12 anzubringenden Temperatursensors in Richtung des Gehäuses 20 der Verschaltungsanordnung bei einer Montage z.B. geschoben werden soll, um etwa eine optimale Positionierung des Temperatursensors zu erreichen.

Die Außenanschlüsse 16, 16a, 16b umfassen Befestigungsmittel, an denen beispielsweise Stromschienen einer Leistungselektronik oder Leistungsversorgung für die Statorwicklung mittels einer Schraubverbindung oder Steckverbindung befestigt werden können. Windungsenden der Statorwicklung können beispielsweise an den Anschlussfahnen des Wicklungsanschlusses nicht-lösbar (beispielsweise mittels Schweißverbindung) befestigt werden.

Fig. 2 zeigt die Verschaltungsanordnung 10 mit dem Temperatursensoraufnahmebereich 12 in einer Draufsicht. Dabei sind am Temperatursensoraufnahmebereich 12 jeweils in Radialrichtung ausgebildete Absätze oder Vorsprünge 24a, 24b der jeweiligen Aufnahmeschienen 12a, 12b zu erkennen. Die Vorsprünge 24a, 24b können zur Sicherung eines aufschiebbaren Temperatursensors oder zur Ausrichtung des aufschiebbaren Temperatursensors bereitgestellt sein.

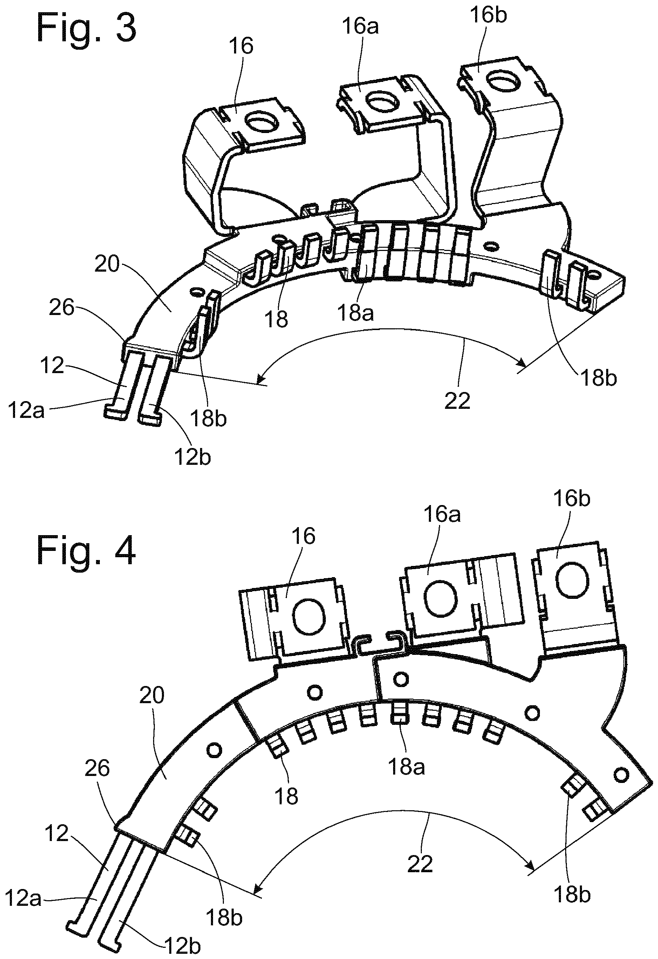

Fig. 3 zeigt ein Beispiel der Verschaltungsanordnung 10 mit einem Temperatursensoraufnahmebereich 12, das zwei separat aus dem Gehäuse 20 der Verschaltungsanordnung 10 hervorstehende Aufnahmeschienen 12a, 12b umfasst. Gemäß dem anhand der Fig. 3 und Fig. 4 gezeigten Beispiel ist das Gehäuse 20 der Verschaltungsanordnung in Umfangsrichtung zu dem Temperatursensoraufnahmebereich 12 erweitert. Durch die Erweiterung ist ein Gehäuseanschlag 26 bereitgestellt, dessen Position einer Position der Markierungspunkte 13 des vorigen Beispiels entsprechen kann. Durch das Bereitstellen des Gehäuseanschlags 26 ist es möglich, eine Montage eines Temperatursensors am Temperatursensoraufnahmebereich 12 zu vereinfachen. Beispielsweise kann ein Temperatursensor auf dem Temperatursensoraufnahmebereich 12 (oder auf eine jeweilige Aufnahmeschiene 12a, 12b) aufgeschoben werden, bis ein Sensorgehäuse des Temperatursensors an dem Anschlag 26 anschlägt.

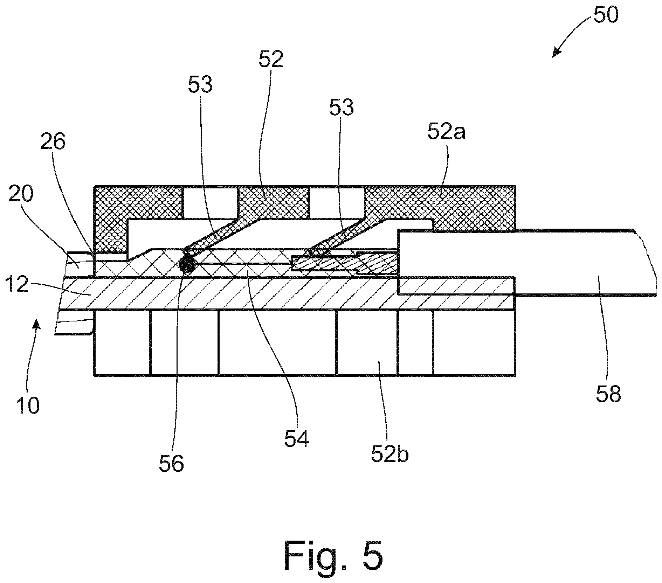

Fig. 5 zeigt ein Ausführungsbeispiel einer Temperatursensoreinrichtung 50 in einem Sensorgehäuse 52 aus einer Hartkomponente. Die in Fig. 5 gezeigte Temperatursensoreinrichtung 50 ist auf einen Temperatursensoraufnahmebereich 12 einer Verschaltungsanordnung 10 (s. z.B. Fig. 1 bis 4) aufgeschoben. Dabei schlägt das Sensorgehäuse 52 der Temperatursensoreinrichtung 50 an einem Gehäuseanschlag 26 des Gehäuses 20 der Verschaltungsanordnung 10 an. Innerhalb des Sensorgehäuses 52 der Temperatursensoreinrichtung 50 ist ein Temperatursensor 54 mit einem Sensorkopf bzw. einem Sensorelement 56 angeordnet. Beispielsweise ist der gezeigte Temperatursensor 54 ein NTC (negativer Temperaturkoeffizient)-Sensor.

Der Temperatursensoraufnahmebereich 12 ist in einer geometrisch an den Temperatursensoraufnahmebereich 12 angepassten Öffnung des Sensorgehäuses 52 aufgenommen. Der Temperatursensor 54 bildet eine innere Oberfläche der Öffnung, sodass der Temperatursensor 54 in direktem Kontakt mit dem Temperatursensoraufnahmebereich 12 steht. An einer dem Gehäuse 20 der Verschaltungsanordnung 10 gegenüberliegenden Seite weist das Sensorgehäuse 52 eine Kabelöffnung zum Herausführen eines Kabels 58 des Temperatursensor 54 auf, das beispielsweise an eine Einrichtung zum Auswerten der Temperatur angeschlossen sein kann. Anhand der in Fig. 5 gezeigten Temperatursensoreinrichtung 50 ist eine wieder lösbare Fixierung des Temperatursensors 54 mittels eines Kunststoffklipps, hier des als Kunststoffklipp ausgebildeten Sensorgehäuses 52 gezeigt. Der Kunststoffklipp kann zumindest teilweise aus einem Thermoplast bestehen.

Der Kunststoffklipp 52 bzw. das Sensorgehäuse 52 kann in einer zu der Darstellung von Fig. 5 senkrechten Ebene C-förmig bzw. U-förmig ausgebildet sein und einen Basisbereich 52a und zwei davon senkrecht abstehende Schenkel 52b aufweisen, von denen in der Schnittdarstellung von Fig. 5 lediglich einer sichtbar ist. Zwischen den beiden Schenkeln 52b ist eine Nut vorgesehen, über welche der Temperatursensor 54 von einer dem Basisbereich 52 gegenüberliegenden Seite eingeführt werden kann. Am Temperatursensoraufnahmebereich 12 oder Fortsatz eines Verbindungsleiters oder einer Stromschiene (z.B. am Temperatursensoraufnahmebereich 12) können Öffnungen ausgebildet sein, in welche die Schenkel 52b des Kunststoffklipps 52 eingefügt werden können. An dem Basisbereich 52a sind Federelemente 53 in Form von Federzungen 53 ausgebildet, über welche eine Fixierung des Kunststoffklipps 52 und des darin aufgenommenen Temperatursensors 54 an dem Temperatursensoraufnahmebereich 12 erfolgt.

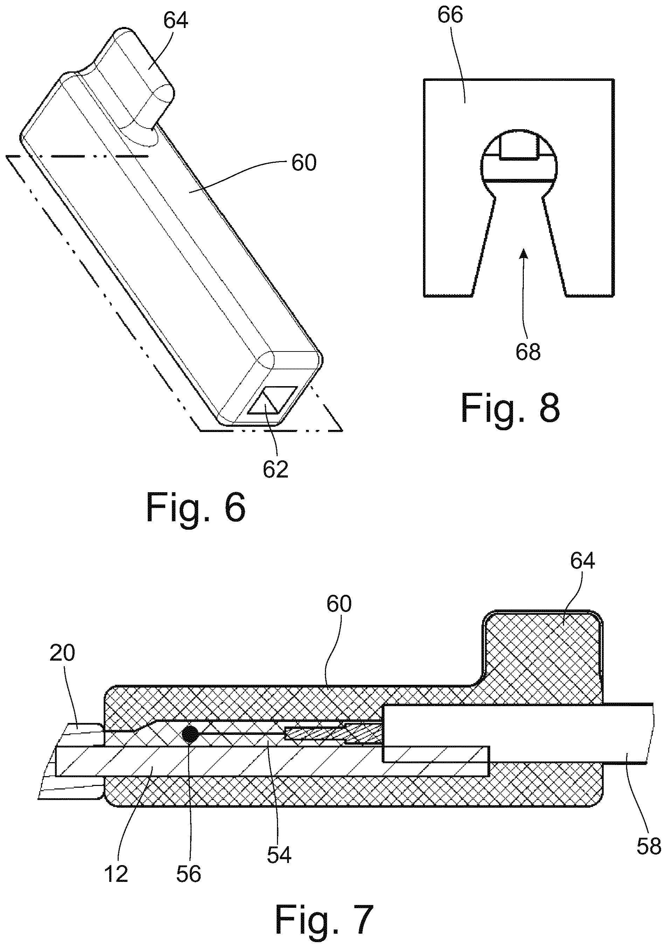

Fig. 6 zeigt eine alternative Möglichkeit zur Anbindung des Temperatursensors 54 an dem Temperatursensoraufnahmebereich 12 des Verbindungsleiters. Dabei ist als Sensorgehäuse zur Aufnahme des Temperatursensors 54 ein Sensorgehäuse 60 bereitgestellt, das ein flexibles Kunststoffelement (z.B. eine Weichkomponente), beispielsweise ein Elastomer, umfasst. Das Sensorgehäuse 60 ist beispielsweise aus Silicon hergestellt.

Das Sensorgehäuse 60 aus der Weichkomponente ist beispielsweise grundsätzlich quaderförmig ausgebildet und weist eine Öffnung 62 auf, deren Querschnitt und/oder Länge an einem Temperatursensoraufnahmebereich einer Verschaltungsanordnung angepasst ist. Beispielsweise ist der Querschnitt der Öffnung 62 kleiner als ein Querschnitt des Temperatursensoraufnahmebereichs 12, sodass sich bei Einschieben des Fortsatzes 12 in die Öffnung 62 eine Spannung des Elastomers ergibt, die das Sensorgehäuse 60 und den Temperatursensor 54 am Temperatursensoraufnahmebereich 12 fixiert. Beispielsweise kann in der Öffnung 62 eine Aufnahmeschiene 12a des Temperatursensoraufnahmebereichs 12 aufgenommen werden. Beispielsweise weist das Sensorgehäuse 60 an einer Rückseite eine Ausformung 64 auf, die ein Montieren oder Entfernen des Sensorgehäuses 60 an einem Fortsatz erleichtern kann. Das Kunststoffelement kann alternativ zylinderförmig ausgebildet sein.

Fig. 7 zeigt das Sensorgehäuse 60 mit montiertem Temperatursensor 54 auf einem Fortsatz oder Temperatursensoraufnahmebereich 12 in einer Schnittansicht. Auf einer Stirnseite (beispielsweise der Rückseite) weist das Kunststoffelement eine Öffnung zur Einführung des Temperatursensors 54 auf, durch die beispielsweise das Kabel 58 des Temperatursensors 54 geführt werden kann. Auf der anderen, gegenüberliegenden Stirnseite ist das Kunststoffelement beispielsweise offen ausgebildet (bspw. durch die Öffnung 62), um das Kunststoffelement zusammen mit dem darin bereits aufgenommenen Temperatursensor 54 auf den Temperatursensoraufnahmebereich 12 aufzuschieben. Die Bemaßung des elastischen Kunststoffelements ist dabei z.B. so gewählt, dass im eingebauten Zustand mechanische Vorspannung herrscht, sodass der Temperatursensor 54 gegen den Temperatursensoraufnahmebereich 12 gepresst wird. Der Schenkel des Kunststoffelements, auf welchem der Temperatursensor 54 anliegt, weist z.B. einen Haltevorsprung auf, um das Kabel 58 des Temperatursensors 54 zu stützen.

Fig. 8 zeigt eine schematische Ansicht einer Rückseite 66 eines Sensorgehäuses (z.B. umfassend ein Thermoplast oder ein Elastomer) für einen Temperatursensor 54 zum Aufschieben auf einen Temperatursensoraufnahmebereich 12. Dabei ist eine Öffnung 68 zu erkennen, durch die der Temperatursensor 54 beispielsweise in das Sensorgehäuse eingebracht werden kann und die ferner beispielsweise ein Kabel 58 des Temperatursensors 54 fixieren kann, sodass z.B. bei mechanischen Zugkräften am Kabel keine Positionsänderung des Temperatursensors 54 zum Temperatursensoraufnahmebereich 12 auftritt.

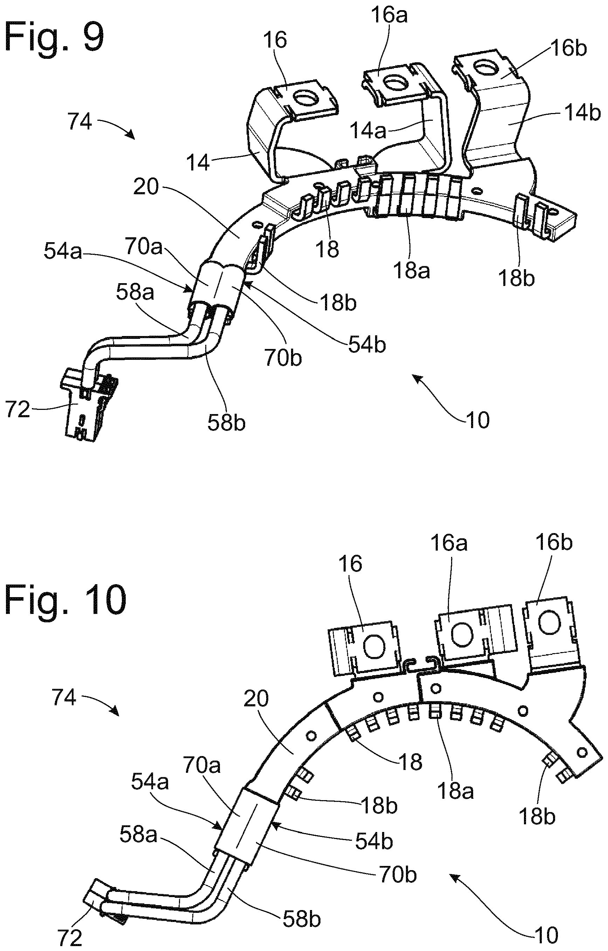

Fig. 9 zeigt ein Ausführungsbeispiel einer Verschaltungsanordnung 10 mit daran angebrachten Temperatursensoren54a, b. Die Temperatursensoren 54a, b sind dabei an einem Temperatursensoraufnahmebereich 12 der Verschaltungsanordnung 10 mittels eines Schrumpfschlauchs befestigt. Ein erster Temperatursensor 54a ist an einer ersten Aufnahmeschiene des Temperatursensoraufnahmebereichs 12 mittels eines ersten Schrumpfschlauches 70a befestigt. Ein zweiter Temperatursensor 54b ist an einer zweiten Aufnahmeschiene des Temperatursensoraufnahmebereichs 12 mittels eines zweiten Schrumpfschlauches 70b befestigt. Die Verwendung eines Schrumpfschlauchs kann einen Kontakt des jeweiligen Temperatursensors 54a, b auf der jeweiligen Aufnahmeschiene des Temperatursensoraufnahmebereichs 12 verbessern.

Jeweilige Anschlusskabel 58a, 58b der Temperatursensoren 54a, b sind aus den Schrumpfschläuchen 70a, 70b herausgeführt und mit einem gemeinsamen Steckelement 72 verbunden (beispielsweise auch bei Ausführungen mit anderem Sensorgehäuse möglich). Dadurch kann ein Anschließen der Temperatursensoren 54a, b beispielsweise an eine Auswerteelektronik besonders einfach per Steckverbindung erfolgen.

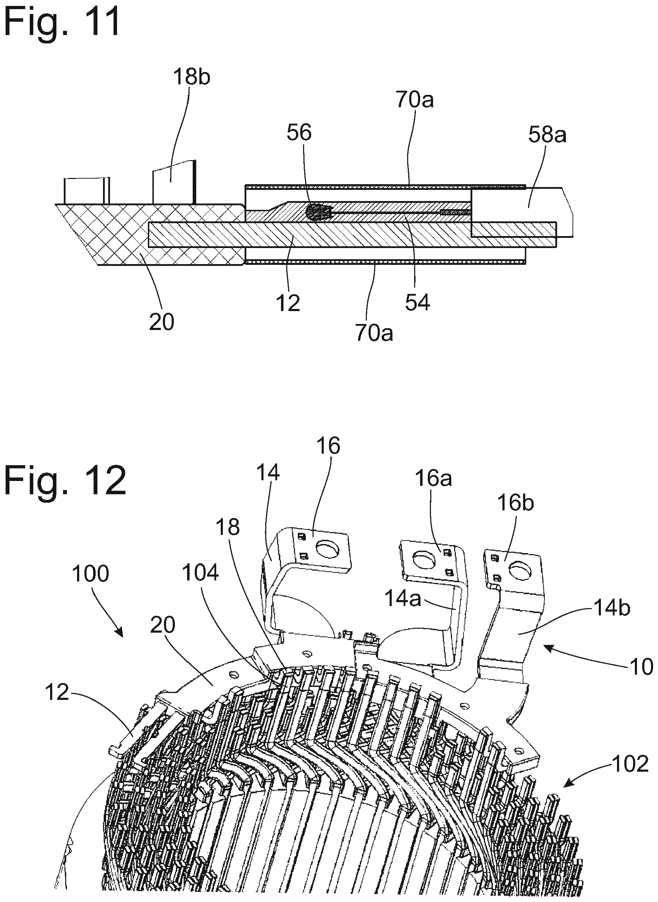

Fig. 10 zeigt das Ausführungsbeispiel gemäß Fig. 9 in einer Draufsicht. Die Verschaltungsanordnung mit dem den montierten Temperatursensoren 54a, b stellt ein System 74 zum Erfassen einer Temperatur bereit, bei dem ein Auswechseln eines oder beider Temperatursensoren 54a, b besonders einfach ermöglicht ist. Dabei kann zum Beispiel bei einem Defekt eines Temperatursensors der jeweilige Schrumpfschlauch 70a aufgetrennt werden und dieser Temperatursensor erneuert werden. Dabei ist es insbesondere nicht notwendig, Arbeiten im Verschaltungsbereich der Verschaltungsanordnung 10 durchzuführen, sodass auch bei ausgebildeten Wicklungskontakten zu einer Statorwicklung (vergleiche Fig. 12) ein Risiko einer Beschädigung jeweiliger Kontaktstellen minimiert ist.

Fig. 11 zeigt die Befestigung des Temperatursensors 54a mit einem Sensorelement 56 mittels des Schrumpfschlauches 70a an dem Temperatursensoraufnahmebereich 12 in einer Schnittansicht. Der Temperatursensoraufnahmebereich 12 ragt aus dem Gehäuse 20 der Verschaltungsanordnung 10 hervor. Der geschrumpfte Schrumpfschlauch 70a drückt dabei den Temperatursensor 54a auf den Temperatursensoraufnahmebereich 12 und fixiert zugleich das Sensorkabel 58a des Temperatursensor 54.

Bei der Befestigung des Temperatursensors 54a unter Verwendung des Schrumpfschlauches ist der Temperatursensor54a auf dem Fortsatz oder Temperatursensoraufnahmebereich 12 angebracht und mittels des Schrumpfschlauches 70a zusammen mit dem Fortsatz 12 umhüllt. Beispielsweise kann der Schlauch unter Verwendung eines Heißföns schrumpfen und somit den Sensorkopf optimiert auf dem Temperatursensoraufnahmebereich 12 befestigen. Die Innenfläche des Schrumpfschlauchs 70a kann zudem selbstklebend ausgebildet sein, um eine zusätzliche Fixierung und/oder eine einfachere Montage zu gewährleiten. Die Umspritzung der Verschaltungsanordnung 10 (beispielsweise das Gehäuse 20) kann als ein Stopppunkt für die Positionierung des Schrumpfschlauchs an dem Temperatursensoraufnahmebereich 12 definieren.

In Fig. 12 ist ein Stator 100 mit einer Verschaltungsanordnung 10 dargestellt. Der Stator weist eine Statorwicklung 102 mit Windungsenden 104 auf, die an jeweiligen Anschlussfahnen der Wicklungsanschlüsse 18, 18a, 18b der jeweiligen Stromschienen der Verschaltungsanordnung 10 elektrisch kontaktiert sind. Dabei ist insbesondere zu erkennen, dass die Kontaktierung zwischen Verschaltungsanordnung 10 und Statorwicklung 102 ausschließlich im Verschaltungsbereich 22 ausgeführt ist. Dagegen ist im Bereich des Temperatursensoraufnahmebereichs 12 keine Kontaktierung zur Statorwicklung 102 ausgebildet, sodass am freiliegenden Fortsatz 12 zur Messung einer Temperatur der Verschaltungsanordnung 10 oder des Stators 100 in einfacher Weise eine Temperatursensoreinrichtung 50 angebracht und ausgewechselt werden kann.

Beispielsweise kann durch vorgeschlagene Befestigungen des Temperatursensors auch eine Erstmontage des Temperatursensors erleichtert werden. Dabei kann die Befestigung des Temperatursensors etwa bei der Montage des Stators als Schritt nach einem Verschalten und Tränken des Stators erfolgen. Zur Fixierung des Temperatursensors auf dem Temperatursensoraufnahmebereich oder dem Fortsatz sind verschiedene Möglichkeiten vorgeschlagen.

Die vorliegende Erfindung schlägt Konzepte zur Befestigung eines Temperatursensors auf einem außerhalb des Verschaltungsbereichs vorgesehenen Fortsatz oder Temperatursensoraufnahmebereich des Verbindungsleiters vor. Dadurch ist es z.B. möglich, den Temperatursensor von dem Fortsatz bei Austauschbedarf in einfacher Weise zu trennen, wobei z.B. ein Risiko, die komplette Verschaltungsanordnung oder insbesondere die elektrischen Kontaktierungsstellen zu schädigen, minimiert ist.

### Bezugszeichen

- 10: Verschaltungsanordnung
- 12: Temperatursensoraufnahmebereich
- 12a, 12b: Aufnahmeschiene des Temperatursensoraufnahmebereichs
- 13: Markierungspunkt
- 14, 14a, 14b: Stromschiene
- 16, 16a, 16b: Außenanschluss
- 18, 18a, 18b: Wicklungsanschluss
- 20: Gehäuse der Verschaltungsanordnung
- 22: Verschaltungsbereich
- 24a, 24b: Haltevorsprung
- 26: Gehäuseanschlag
- 50: Temperatursensoreinrichtung
- 52: Sensorgehäuse der Temperatursensoreinrichtung
- 52a: Basisbereich
- 52b: Schenkel
- 53: Federelement
- 54: Temperatursensor
- 54a, 54b: Temperatursensor
- 56: Sensorelement
- 58: Kabel des Temperatursensors
- 60: Sensorgehäuse für einen Temperatursensor
- 62: Öffnung zur Aufnahme des Temperatursensoraufnahmebereichs
- 64: Ausformung
- 66: Rückseite
- 68: Öffnung zur Fixierung des Kabels
- 70a, 70b: Schrumpfschlauch
- 72: Steckelement
- 74: System zum Erfassen einer Temperatur
- 100: Stator
- 102: Statorwicklung
- 104: Windungsende

## Patentansprüche

1. Stator (100) einer elektrischen Maschine mit einer Verschaltungsanordnung (10) zur elektrischen Verschaltung von Statorspulen mit Außenanschlüssen mittels Schaltringen, wobei die Verschaltungsanordnung (10) umfasst:
- einen Temperatursensoraufnahmebereich (12), welcher als einteiliger Fortsatz einer Stromschiene (14) oder eines Verbindungsleiters der Verschaltungsanordnung (10) ausgebildet ist, wobei
- an dem Temperatursensoraufnahmebereich (12) ein Temperatursensor (54) festgelegt ist und wobei sich
- der Temperatursensor (54) zur Erfassung einer Temperatur des Temperatursensoraufnahmebereichs (12) zu diesem im thermischen Kontakt befindet und wobei
- der Temperatursensor (54) in einem Sensorgehäuse (52, 60) an dem Temperatursensoraufnahmebereich (12) angeordnet ist,
**dadurch gekennzeichnet, dass**
- der Temperatursensor (54) in einem eine Hartkomponente und/oder eine Weichkomponente umfassenden Sensorgehäuse (52, 60) angeordnet ist, wobei
- wobei der Temperatursensor (54) und das Sensorgehäuse (52, 60) eine Temperatursensoreinrichtung (50) bilden, und dass
- der Temperatursensoraufnahmebereich (12) durch eine Aufnahmeschiene ausgebildet ist, und dass
- das Sensorgehäuse (52, 60) eine Öffnung (62) zur Aufnahme des Temperatursensoraufnahmebereichs (12) aufweist und der Temperatursensor (54) an einer Oberfläche innerhalb der Öffnung (62) angeordnet ist und wobei
- die Temperatursensoreinrichtung (50) mit dessen Sensorgehäuse (52, 60) auf die Aufnahmeschiene aufgesteckt oder aufgeschoben ist und der Temperatursensor (54) in thermischen Kontakt mit dem Temperatursensoraufnahmebereich (12) angeordnet ist.

2. Stator (100) gemäß Anspruch 1, **dadurch gekennzeichnet, dass**
- die Stromschiene (14) ein Schaltringsegment mit einem Außenanschluss (16) und einem Wicklungsanschluss (18) ausbildet,
- wobei Kontaktelemente des Außenanschlusses (16) und des Wicklungsanschlusses (18) in einem in Umfangsrichtung des Schaltringsegments ausgebildeten Verschaltungsbereich (22) angeordnet sind, wobei
- durch den Verschaltungsbereich (22) ein Strompfad der Verschaltungsanordnung (10) von Außenanschluss (16) zu Wicklungsanschluss (18) verläuft, wobei
- der Temperatursensoraufnahmebereich (12) außerhalb des Verschaltungsbereiches (22) an dem Schaltringsegment ausgebildet ist.

3. Stator (100) nach Anspruch 2, **dadurch gekennzeichnet, dass** sich der Temperatursensoraufnahmebereich (12) in Umfangsrichtung des Schaltringsegments erstreckt.

4. Stator (100) nach Anspruch 2, **dadurch gekennzeichnet, dass** sich der Temperatursensoraufnahmebereich (12) in einer axialen und/oder radialen Richtung des Schaltringsegments erstreckt.

5. Stator (100) nach einem der Ansprüche 1-4, **dadurch gekennzeichnet, dass** der Temperatursensoraufnahmebereich (12) zwei Aufnahmeschienen (12a, 12b) aufweist.

6. Stator (100) nach einem der Ansprüche 2-5, **dadurch gekennzeichnet, dass** der Temperatursensoraufnahmebereich (12) an seinem dem Verschaltungsbereich (22) abgewandten Ende zumindest einen Haltevorsprung (24a) aufweist.

7. Stator (100) nach einem der Ansprüche 1-6, **dadurch gekennzeichnet, dass** die Verschaltungsanordnung (10) ein Gehäuse (20) mit einem Gehäuseanschlag (20) für das Sensorgehäuse (52) der Temperatursensoreinrichtung (50) ausbildet.

8. Stator (100) nach einem der Ansprüche 1-7, **dadurch gekennzeichnet, dass** das Sensorgehäuse (52) zumindest teilweise aus einer Hartkomponente gebildet ist und Federelemente (53) zum Fixieren des Sensorgehäuses (52) an dem Temperatursensoraufnahmebereich (12) aufweist.

9. Stator (100) nach einem der Ansprüche 1-8, **dadurch gekennzeichnet, dass** das Sensorgehäuse (52, 60) als ein vom Temperatursensoraufnahmebereich (12) abnehmbares Kunststoffsensorgehäuses (52, 60) ausgebildet ist.

10. Elektrische Maschine mit einem Stator (100) gemäß einem der Ansprüche 1-9.

## Claims

1. Stator (100) of an electrical machine with an interconnection arrangement (10) for electrically interconnecting stator coils to external terminals by means of connector rings, wherein the interconnection arrangement (10) comprises:
- a temperature sensor receiving region (12) which is in the form of a single-piece extension of a busbar (14) or of a connecting conductor of the interconnection arrangement (10), wherein
- a temperature sensor (54) is secured to the temperature sensor receiving region (12), and wherein
- the temperature sensor (54) is in thermal contact with the temperature sensor receiving region (12) in order to detect a temperature of the latter, and wherein
- the temperature sensor (54) is arranged in a sensor housing (52, 60) in the temperature sensor receiving region (12),
**characterized in that**
- the temperature sensor (54) is arranged in a sensor housing (52, 60) comprising a hard component and/or a soft component,
- wherein the temperature sensor (54) and the sensor housing (52, 60) form a temperature sensor device (50), and **in that**
- the temperature sensor receiving region (12) is formed by a receiving bar, and **in that**
- the sensor housing (52, 60) has an opening (62) for accommodating the temperature sensor receiving region (12), and the temperature sensor (54) is arranged on a surface inside the opening (62), and wherein
- the temperature sensor device (50), with its sensor housing (52, 60), is slipped or pushed onto the receiving bar, and the temperature sensor (54) is arranged in thermal contact with the temperature sensor receiving region (12).

2. Stator (100) according to Claim 1, **characterized in that**
- the busbar (14) forms a connector ring segment with an external terminal (16) and a winding terminal (18),
- wherein contact elements of the external terminal (16) and of the winding terminal (18) are arranged in an interconnection region (22) formed in the circumferential direction of the connector ring segment, wherein
- a current path of the interconnection arrangement (10) extends through the interconnection region (22) from the external terminal (16) to the winding terminal (18), wherein
- the temperature sensor receiving region (12) is formed outside the interconnection region (22) on the connector ring segment.

3. Stator (100) according to Claim 2, **characterized in that** the temperature sensor receiving region (12) extends in the circumferential direction of the connector ring segment.

4. Stator (100) according to Claim 2, **characterized in that** the temperature sensor receiving region (12) extends in an axial and/or radial direction of the connector ring segment.

5. Stator (100) according to one of Claims 1-4, **characterized in that** the temperature sensor receiving region (12) has two receiving bars (12a, 12b).

6. Stator (100) according to one of Claims 2-5, **characterized in that** the temperature sensor receiving region (12) has at least one retaining projection (24a) at its end remote from the interconnection region (22).

7. Stator (100) according to one of Claims 1-6, **characterized in that** the interconnection arrangement (10) forms a housing (20) with a housing limit stop (20) for the sensor housing (52) of the temperature sensor device (50).

8. Stator (100) according to one of Claims 1-7, **characterized in that** the sensor housing (52) is formed at least in part of a hard component and has spring elements (53) for fixing the sensor housing (52) to the temperature sensor receiving region (12).

9. Stator (100) according to one of Claims 1-8, **characterized in that** the sensor housing (52, 60) is in the form of a plastics sensor housing (52, 60) removable from the temperature sensor receiving region (12).

10. Electrical machine having stator (100) according to one of Claims 1-9.

## Revendications

1. Stator (100) d'une machine électrique muni d'un ensemble de câblage (10) destiné à câbler électriquement des bobines de stator à des bornes extérieures au moyen de bagues de commutation, l'ensemble de câblage (10) comprenant :
- une zone de réception de capteur de température (12), qui est conçue comme une extension monobloc d'une barre conductrice (14) ou d'un conducteur de liaison de l'ensemble de câblage (10),
- un capteur de température (54) étant fixé à la zone de réception de capteur de température (12) et
- le capteur de température (54) destiné à détecter une température de la zone de réception de capteur de température (12) étant en contact thermique avec celle-ci et
- le capteur de température (54) étant disposé dans un boîtier de capteur (52, 60) sur la zone de réception de capteur de température (12),
**caractérisé en ce que**
- le capteur de température (54) est disposé dans un boîtier de capteur (52, 60) comprenant un composant dur et/ou un composant souple,
- le capteur de température (54) et le boîtier de capteur (52, 60) forment un dispositif formant capteur de température (50), et
- la zone de réception de capteur de température (12) est formée par un rail de réception, et
- le boîtier de capteur (52, 60) comporte une ouverture (62) destinée à recevoir la zone de réception de capteur de température (12) et le capteur de température (54) est disposé sur une surface située à l'intérieur de l'ouverture (62) et
- le dispositif formant capteur de température (50) étant disposé avec son boîtier de capteur (52, 60) par enfichage ou coulissement sur le rail de réception et le capteur de température (54) étant disposé en contact thermique avec la zone de réception de capteur de température (12).

2. Stator (100) selon la revendication 1, **caractérisé en ce que**
- la barre conductrice (14) forme un segment de bague de commutation pourvu d'une borne extérieure (16) et d'une borne d'enroulement (18),
- des éléments de contact de la borne extérieure (16) et de la borne d'enroulement (18) étant disposés dans une zone de câblage (22) formée dans la direction circonférentielle du segment de bague de commutation,
- un chemin de courant de l'ensemble de câblage (10) s'étendant à travers la zone de câblage (22) depuis la borne extérieure (16) jusqu'à la borne d'enroulement (18),
- la zone de réception de capteur de température (12) étant formée à l'extérieur de la zone de câblage (22) sur le segment de bague de commutation.

3. Stator (100) selon la revendication 2, **caractérisé en ce que** la zone de réception de capteur de température (12) s'étend dans la direction circonférentielle du segment de bague de commutation.

4. Stator (100) selon la revendication 2, **caractérisé en ce que** la zone de réception de capteur de température (12) s'étend dans une direction axiale et/ou radiale du segment de bague de commutation.

5. Stator (100) selon l'une des revendications 1 à 4, **caractérisé en ce que** la zone de réception de capteur de température (12) comporte deux rails de réception (12a, 12b).

6. Stator (100) selon l'une des revendications 2 à 5, **caractérisé en ce que** la zone de réception de capteur de température (12) présente au moins une saillie de retenue (24a) à son extrémité opposée à la zone de câblage (22).

7. Stator (100) selon l'une des revendications 1 à 6, **caractérisé en ce que** l'ensemble de câblage (10) forme un boîtier (20) muni d'une butée de boîtier (20) destinée au boîtier de capteur (52) du dispositif formant capteur de température (50).

8. Stator (100) selon l'une des revendications 1 à 7, **caractérisé en ce que** le boîtier de capteur (52) est au moins partiellement formé à partir d'un composant dur et comporte des éléments à ressort (53) destiné à fixer le boîtier de capteur (52) à la zone de réception de capteur de température (12).

9. Stator (100) selon l'une des revendications 1 à 8, **caractérisé en ce que** le boîtier de capteur (52, 60) est conçu comme un boîtier de capteur en matière synthétique (52, 60) qui peut être retiré de la zone de réception de capteur de température (12).

10. Machine électrique comprenant un stator (100) selon l'une des revendications 1 à 9.
